Europäisches Patentamt

European Patent Office

Office européen des brevets

(19)

(11) Veröffentlichungsnummer: **0 000 580**
**B1**

(12) **EUROPÄISCHE PATENTSCHRIFT**

(21) Anmeldenummer: **78100505.3**

(22) Anmeldetag: **26.07.78**

(51) Int. Cl.³: **C 08 G 18/08, C 08 K 3/34**

(54) Verfahren zur Herstellung anorganisch-organischer Kunststoffe

(30) Priorität: **02.08.77 DE 2734690**

(43) Veröffentlichungstag der Anmeldung:
**07.02.79 Patentblatt 79/03**

(45) Bekanntmachung des Hinweises auf die Patenterteilung:
**17.09.80 Patentblatt 80/19**

(84) Benannte Vertragsstaaten:
**BE DE FR GB**

(56) Entgegenhaltungen:
**Keine**

(73) Patentinhaber: **BAYER AG**
**Zentralbereich Patente, Marken und Lizenzen**
**D - 5090 Leverkusen 1, Bayerwerk (DE)**

(72) Erfinder: **Scholl, Hans-Joachim, Dr.**
**Rudolf-Sohm-Strasse 28**
**D - 5000 Köln 60 (DE)**
**Dieterich, Dieter, Dr.**
**Ludwig-Girtler-Strasse 1**
**D - 5090 Leverkusen 1 (DE)**
**Markusch, Peter, Dr.**
**River View Terrace 1014**
**New Martinsville, W.Va. 26155 (US)**
**Welte, Rainer, Dr.**
**Kaiserstrasse 7**
**D - 5090 Leverkusen 1 (DE)**

EP 0 000 580 B1

# 0 000 580

## Verfahren zur Herstellung anorganisch-organischer Kunststoffe

Anorganisch-organische Kunststoffe auf Basis von Polyisocyanaten und wäßrigen Alkalisilikatlösungen sind bekannt; vergl. z.B. DT—OS 1 770 384, 2 227 147, 2 359 606, 2 359 607, 2 359 608, 2 359 609, 2 359 610, 2 359 611, 2 359 612, DT—AS 2 325 090 und 2 310 559.

Auf diese Weise lassen sich Kunststoffe herstellen, die aufgrund der anorganischen Anteile gegenüber rein organischen Stoffen vor allem verbesserte Brandwidrigkeit aufweisen und die je nach Zusammensetzung und Reaktionsbedingungen geschäumt oder ungeschäumt, hart oder weich, spröde oder flexibel sein können. Durch die große Variabilität der Eigenschaften bieten diese anorganisch-organischen Kunststoffe ein breites Spektrum von Anwendungsmöglichkeiten.

Diesen Kombinationskunststoffen ist gemeinsam, daß zu ihrer Herstellung die organische und die anorganische Phase miteinander vermischt werden müssen. Hierbei entstehen Dispersionen vom Typ W/O (Wasser in öl) oder O/W (öl- in- Wasser).

Die aus einer Dispersion vom Typ W/O hervorgegangenen Kunststoffe sind besonders interessant. Sie weisen, auch unter Feuchteinwirkung, hohe mechanische Festigkeiten auf, weil die gehärtete kohärente organische Phase die ebenfalls gehärtete wäßrige anorganische inkohärente Phase umhüllt und damit fixiert. Von der perfekten kohärenten organischen Phase dieser Kunststoffe hängt aber auch, bedingt durch die eingeschlossene Wassermenge, die verbesserte Brandwidrigkeit derartiger Systeme ab.

Man hat versucht, zur Herstellung der beschriebenen Kunststoffe die Reaktionskomponenten in einer diskontinuierlich oder kontinuierlich arbeitenden Mischvorrichtung einstufig oder in mehreren Stufen miteinander zu vermischen und die entstandene Dispersion anschließend erstarren zu lassen.

So wird z.B. nach DT—OS 2 359 606 die Vermischung von
a) einem organischen Polyisocyanat
b) einer wäßrigen Silikatlösung
c) einer organischen Komponente
so vorgenommen, daß zunächst die Anteile b) und c) vorgemischt oder aber a), b) und c) gleichzeitig vermischt werden.

Auf diese Weise erhält man jedoch vielfach Produkte, die mit zunehmendem Anteil an organischer Komponente in steigendem Maße Störungen aufweisen können, die im Extremfall den geregelten Aufbau eines anorganisch-organischen Kunststoffes verhindern.

Der Erfindung liegt die Aufgabe zugrunde, die oben beschriebenen Nachteile zu vermeiden und anorganisch-organische Kunststoffe, auch bei hohen Mengen an organischen Anteilen, problemlos herzustellen.

Diese Aufgabe wird mit dem erfindungsgemäßen Verfahren gelöst.

Gegenstand der vorliegenden Erfindung ist somit ein Verfahren zur Herstellung anorganisch-organischer Kunststoffe hoher Festigkeit, Elastizität, Wärmeformbeständigkeit und Schwerentflammbarkeit, bestehend aus einem als kolloides Xerosol vorliegenden Polymer-Polykieselsäuregel-Verbundmaterial durch Vermischen von
a) einem organischen Polyisocyanat
b) einer wäßrigen basischen Lösung und/oder einer wäßrigen basischen Suspension mit Gehalten an anorganischem Feststoff von 20—80 Gew.-%, vorzugsweise 30—70 Gew.-%,
c) einer organischen Verbindung, die mindestens ein gegenüber Isocyanat reaktionsfähiges Wasserstoffatom sowie mindestens eine nichtionisch-hydrophile Gruppe enthält, und
d) gegebenenfalls Katalysatoren und weiteren Zusatzmitteln und Ausreagierenlassen des so erhaltenen Gemischs,
dadurch gekennzeichnet, daß die Vermischung in der Weise vorgenommen wird, daß zunächst die Komponenten a) und b), gegebenenfalls unter Zusatz der ganzen Menge oder eines Teils der Komponente d), zu einer stabilen Primärdispersion umgesetzt und anschließend die Komponente c), gegebenenfalls unter Zusatz der ganzen Menge oder eines Teils der Komponente d), unter Ausbildung einer Enddispersion zugegeben wird, wobei die Enddispersion vor Beginn des Aushärtens bei Raumtemperatur einen Viskositätsbereich von 100—4000 cP aufweist und aus 10—50 Gew.-% anorganisch wäßriger Phase und 90—50 Gew.-% organischer Phase besteht.

Das erfindungsgemäße Verfahren kann kontinuierlich oder vorzugsweise diskontinuierlich durchgeführt werden. Nach der diskontinuierlichen Arbeitsweise wird zuerst die stabile Primärdispersion aus Polyisocyanat, wäßriger basischer Lösung oder Suspension und gegebenenfalls weiteren Zusatzmitteln wie Aktivatoren, Emulgatoren und Treibmitteln hergestellt und dann die Zugabe der organischen Verbindung (Komponente c)) vorgenommen. Nach der kontinuierlichen Arbeitsweise wird entsprechend der diskontinuierlichen Arbetsweise durch eine spezielle maschinelle Anordnung vorab die Primärdispersion in einer Vorkammer erzeugt, die Vermischung mit der organischen Verbindung (Komponente c)) erfolgt kontinuierlich in einem nachgelagerten Mischkopf.

Die diskontinuierliche Variante empfiehlt sich bei der Mitverwendung von solchen organischen Verbindungen als Komponente c), die z.B. wäßrige Alkalisilikatlösungen spontan gelieren. Hierbei wird vorzugsweise zunächst aus Polyisocyanat und z.B. wäßrigem Alkalisilikat eine stabile Primärdispersion hergestellt und anschließend die Komponente c) zudosiert.

Oftmals erwünschte, längere Mischzeiten lassen sich nach dem diskontinuierlichen Verfahren dadurch realisieren, daß der zur Aushärtung benötigte Aktivator erst nach Herstellung der stabilen Primärdispersion zugegeben wird.

Organische Verbindungen gemäß Komponente c), die wäßrige Alkalisilikate nicht oder nur sehr langsam gelieren, können sowohl nach der kontinuierlichen als auch nach dem diskontinuierlichen Verfahren eingesetzt werden.

Erfindungsgemäß wird eine Vermischung der einzelnen Komponenten z.B. in der Reihenfolge vorgenommen, daß räumlich und zeitlich zuerst aus den Komponenten a) und b), gegebenenfalls unter Zusatz der ganzen Menge oder eines Teils der Komponente d), eine Dispersion mit Hilfe eines Mischaggregats hergestellt wird und zu dieser Dispersion in einem räumlich und zeitlich danach angeordneten Mischaggregat die Komponente c), gegebenenfalls unter Zusatz der ganzen Menge oder eines Teils der Komponente d), zugegeben wird.

Zur technischen Durchführung dieser nacheinander erfolgenden Vermischung ergeben sich verschiedene Möglichkeiten:

1) Es werden zwei Rührwerksmischköpfe benutzt.

2) Es werden zwei Mischaggregate benutzt, die aus zwei nacheinander auf einer angetriebenen Achse angebrachten Mischorganen bestehen, wobei die Komponenten a) und b) [und ggf. d)] am oberen Teil der angetriebenen Achse eindosiert werden, die Komponente c) [und ggf. d)] dagegen im unteren Teil der Achse.

3) Die Mischaggregate bestehen aus zwei nacheinander angeordneten statischen Mischvorrichtungen, wobei die Komponenten a) und b) [und ggf. d)] am ersten statischen Mischer eindosiert werden und nach dem Passieren der ersten Mischstrecke im zweiten statischen Mischer mit der Komponente c) [und ggf. d)] vermischt werden.

4) Als erstes Mischaggregat wird ein Rührwerksmischkopf benutzt und als zweites Mischaggregat ein statischer Mischer.

5) Als erstes Mischaggregat wird ein statischer Mischer und als zweites Mischaggregat ein Rührwerksmischkopf benutzt.

Als erfindungsgemäß einzusetzende Ausgangskomponenten (Komponente a) kommen aliphatische, cycloaliphatische, araliphatische, aromatische und heterocyclische Polyisocyanate in Betracht, wie sie z.B. von W. Siefken in Justus Liebigs Annalen der Chemie, 562, Seiten 75 bis 136, beschrieben werden, beispielsweise solche, wie sie in der DE—OS 2 647 482 Seiten 5—6 genannt werden.

Es ist auch möglich, die bei der technischen Isocyanatherstellung anfallenden Isocyanatgruppen aufweisenden Destillationsrückstände, gegebenenfalls gelöst in einem oder mehreren der vorgenannten Polyisocyanate, einzusetzen. Ferner ist es möglich, beliebige Mischungen der vorgenannten Polyisocyanate zu verwenden.

Besonders bevorzugt werden in der Regel die technisch leicht zugänglichen Polyisocyanate, z.B. das 2,4- und 2,6-Toluylendiisocyanat sowie beliebige Gemische dieser Isomeren ("TDI"), Polyphenyl-polymethylen-polyisocyanate, wie sie durch Anilin-Formaldehyd-Kondensation und anschließende Phosgenierung hergestellt werden ("rohes MDI") und Carbodiimidgruppen, Urethangruppen, Allophanatgruppen, Isocyanuratgruppen, Harnstoffgruppen oder Biuretgruppen aufweisenden Polyisocyanate ("modifizierte Polyisocyanate").

Erfindungsgemäße besonders bevorzugt sind ionische Gruppen aufweisende Polyisocyanate, wie sie in der DT—OS 2 227 147 beschrieben werden, beispielsweise sulfonierte Polyisocyanate (DT—OS 2 227 111, 2 359 614, 2 359 615), Carboxylatgruppen aufweisende Polyisocyanate (DT—OS 2 359 613). Erfindungsgemäß bevorzugt sind auch nicht ionisch-hydrophile Polyisocyanate, wie sie in der DT—OS 2 325 909 beschrieben werden, ferner polare Gruppen aufweisende Polyisocyanate gemäß der DT—OS 2 359 608 und phenolische OH-Gruppen aufweisende Polyisocyanate, wie sie in der DT—OS 2 359 616 genannt werden.

Die obengenannten, besonders bevorzugten Polyisocyanate werden vorzugsweise aus Polyphenyl-polymethylen-polyisocyanaten, wie sie durch Anilin-Formaldehyd-Kondensation und anschließende Phosgenierung hergestellt werden ('rohes MDI') sowie aus den daraus durch Abdestillation von Zweikernprodukten erhältlichen Destillationsrückständen, die im allgemeinen eine Viskosität zwischen 50 und 50 000 P/25°C, einen NCO-Gehalt von 28—33 Gewichtsprozent sowie eine Funktionalität >2 aufweisen, hergestellt.

Erfindungsgemäß werden ferner als Ausgangskomponenten (Komponente b)) wäßrige basische Lösungen oder Suspensionen mit einem Gehalt an anorganischem Feststoff von 20—80 Gew.-%, vorzugsweise 30—70 Gew.-%, vor allem wäßrige Alkalisilikatlösungen oder alkalisch stabilisierte Kieselsole, aber auch flüssig-fließfähige basische Suspensionen feinteiliger Füllstoffe, eingesetzt. Oftmals werden die vorgenannten wäßrigen basischen Lösungen oder Suspensionen auch in Kombination eingesetzt.

Unter wäßrigen Lösungen von Alkalisilikaten sind die üblicherweise als "Wasserglas" bezeichneten Lösungen von Natrium und/oder Kaliumsilikat in Wasser zu verstehen. Es können auch rohe technische Lösungen, welche zusätzlich z.B. Calciumsilikat, Magnesiumsilikat, Borate und Aluminate erhalten können, Verwendung finden. Vorzugsweise werden indessen 32—54 Gew.-%ige Natriumsilikatlösungen eingesetzt, mit einem molaren Verhältnis $Na_2O/SiO_2$ von 1:1,6 bis 1:3,3.

Als Komponente c) sind (vorzugsweise bei Raumtemperatur flüssige) organische Verbindungen zu verstehen, die außer mindestens einem gegenüber Isocyanat reaktiven Wasserstoffatom mindestens eine nichtionisch-hydrophile Gruppe aufweisen.

Bei den nichtionisch-hydrophilen Gruppen handelt es sich vor allem um hydrophile Polyäthergruppierungen.

Bevorzugt kommen dabei Polyäthergruppen in Betracht, die aus Äthylenoxid und/oder Propylenoxid aufgebaut sind.

Geeignete organische Verbindungen, die außer einem gegenüber Isocyanat reaktiven Wasserstoffatom mindestens über eine nichtionisch-hydrophile Gruppe verfügen, sind besonders Polyäther, die aus Alkoholen mit einer Funktionalität von 1—3 und Äthylenoxid und/oder Propylenoxid ausgebaut sind und endständig OH-Gruppen aufweisen.

Auch kann das hydrophile Zentrum durch Einbau eines Glykols wie Tri- und Tetraäthylenglykol in die organische Verbindung eingeführt werden.

Selbstverständlichen können erfindungsgemäß auch andersartig hergestellte Polyäthergruppierungen aufweisende organische Verbindungen eingesetzt werden, sofern sie — neben mindestens einem reaktiven H-Atom — hydrophile Gruppierungen enthalten, z.B. monofunktionelle Polyäther auf Basis von Monoalkoholen und Äthylenoxid. Der Äthylenoxidanteil im Polyäther soll vorzugsweise mindestens 10 Gew.-% betragen.

Erfindungsgemäß geeignete nichtionische-hydrophile Verbindungen sind weiterhin Polycarbonate auf Basis von Äthylenglykol, Propylenglykol, Tetraäthylenglykol. In Frage kommt hier auch Formose, so wie sie z.B. in den DT—OS 2 639,084, 2 639 083, 2 714 084, 2 714 104, 2 721 186 und 2 721 093 beschrieben wird.

Weiterhin sind auch Verbindungen geeignet, welche ein hydrophiles Polyestersegment, z.B. Triäthylenglykol oder Diäthylenglykol und Bernsteinsäure oder Oxalsäure enthalten. Derartige Segmente können im Verlauf der weiteren Reaktion mit Wasserglas zerstört werden, wobei unter Härtung der anorganischen Komponente eine Hydrophobierung der organischen Komponente eintritt.

Polyäther, die aus Aminen mit einer Funktionalität von 1—4 und Äthylenoxid und/oder Propylenoxid aufgebaut sind und endständige OH-Gruppen aufweisen sind ebenfalls insbesondere für das diskontinuierliche Verfahren geeignet.

Erfindungsgemäß werden gegebenenfalls leicht flüchtige organische Substanzen als Treibmittel mitverwendet, wie sie z.B. in der DE—OS 2 647 482, Seite 13, genannt werden. Eine Treibwirkung kann auch durch Zusatz von bei Temperaturen über Raumtemperatur unter Abspaltung von Gasen, beispielsweise von Stickstoff, sich zersetzenden Verbindungen, z.B. Azoverbindungen wie Azoisobuttersäurenitril, erzielt werden.

Auch das in der wäßrigen basischen Lösung oder Suspension enthaltene Wasser kann die Funktion des Treibmittels übernehmen. Ferner können feine Metallpulver, z.B. Calcium, Magnesium, Aluminium oder Zink durch Wasserstoffentwicklung mit ausreichend alkalischem Wasserglas als Treibmittel dienen, wobei sie gleichzeitig eine härtende und verstärkende Wirkung ausüben.

Erfindungsgemäß werden ferner oft Katalysatoren mitverwendet, z.B. solche, wie sie in der DE—OS 2 647 482 Seiten 13—15, beschrieben werden.

Weitere Vertreter von erfindungsgemäß zu verwendenden Katalysatoren sowie Einzelheiten über die Wirkungsweise der Katalysatoren sind im Kunststoff-Handbuch, Band VII, herausgegeben von Vieweg und Höchtlen, Carl-Hanser-Verlag, München, 1966, z.B. auf den S.96 bis 102, beschrieben.

Die Katalysatoren werden in der Regel in einer Menge zwischen etwa 0,001 und 10 Gew.-%, bezogen auf die Menge an Isocyanat, eingesetzt.

Erfindungsgemäß können auch oberflächenaktive Zusatzstoffe (Emulgatoren und Schaumstabilisatoren) mitverwendet werden, ferner Reaktionsverzögerer, Zellregler der an sich bekannten Art, Pigmente, Farbstoffe, Flammschutzmittel, Stabilisatoren gegen Alterungs- und Witterungseinflüsse, Weichmacher, fungistatisch und bakteriostatisch wirkende Substanzen und Füllstoffe (Vgl. hierzu z.B. DE—OS 2 647 482, Seiten 15—16).

Weitere Beispiele von gegebenenfalls erfindungsgemäß mitzuverwendenden oberflächenaktiven Zusatzstoffen und Schaumstabilisatoren sowie Zellreglern, Reaktionsverzögerern, Stabilisatoren, flammhemmende Substanzen, Weichmachern, Farbstoffen und Füllstoffen sowie fungistatisch und bakteriostatisch wirksamen Substanzen sowie Einzelheiten über Verwendungs- und Wirkungsweise dieser Zusatzmittel sind im Kunststoff-Handbuch, Band VII, herausgegeben von Vieweg und Höchtlen, Carl-Hanser-Verlag, München 1966, z.B. auf den S. 103 bis 113, beschrieben. Die Vermischung der Reaktionskomponenten erfolgt vorzugsweise bei Raumtemperatur.

Zur Deutung der technischen Vorteile gemäß der Erfindung wird angenommen, daß die nach dem erfindungsgemäßen Verfahren zwischenzeitlich hergestellte Primärdispersion außerordentlich stabil ist und auch weitere Zusätze diesen stabilen Zustand über die Reaktions- und Aushärtungszeit hinaus nicht gefährden.

Nach dem bisherigen Stand der Technik erhält man hingegen in der Regel Dispersionen, die bei zunehmend höherem Anteil an organischen Komponenten unter Veränderung der W/O-Phasenstruktur instabile Dispergierungszustände durchlaufen, die nach Aushärtung Störungen im Aufbau des anorganisch-organischen Kunststoffs ergeben können.

Denn organische Substanzen können, nach herkömmlichen Mischtechniken eingebracht, Entmischungsvorgänge einleiten und dadurch die Herstellung technisch brauchbarer anorganisch-organischer Kunststoffe verhindern. Es wird als wahrscheinlich angenommen, daß derartige Zusätze die anorganische Phase gelieren und/oder daß durch vorzeitige Vernetzungsreaktion mit dem Polyisocyanat eine ausreichende Vermischung der organischen und anorganischen Phase ausbleibt.

Die Verfahrensprodukte finden die für organisch-anorganische Kunststoffe bekannte Anwendung, z.B. als Schall- und Wärmedämmstoffe, als Baumaterial, als Beton- und Fugenvergußmassen.

## Beispiele
(%-Angaben sind, falls nicht anders vermerkt, Gew.-%-Angaben).

Ausgangsmaterialien:

a) Polyisocyanatkomponente

$A_1$: Von rohem Phosgenierungsprodukt eines Anilin/Formaldehyd-Kondensats wird soviel Diisocyanato-diphenylmethan abdestilliert, daß der Destillationsrückstand bei 25°C eine Viskosität von 400 cP aufweist. (2-Kernanteil: 45,1 Gew.-%, 3-Kernanteil:, 22,3 Gew.-%, Anteil an höherkernigen Polyisocyanaten: 32,6 Gew.-%) NCO-Gehalt: 30—31 Gew.-%.

$A_2$: Mit gasförmigem Schwefeltrioxid sulfoniertes $A_1$ (Schwefelgehalt: 0,96%, NCO-Gehalt: 30,5%, Viskosität bei 25°C: 24000 cP, Herstellung s. DT—OS 2 227 111).

$A_3$: Entsprechend mit Chlorsulfonsäure sulfoniertes $A_1$ (Schwefelgehalt: 0,9%, NCO-Gehalt: 30,2% Viskosität bei 20°C: 2000 cP).

b) Silikatkomponente

$B_1$: Natriumwasserglas, 44% Feststoff, Molgewichtverhältnis $Na_2O : SiO_2 = 1:2$

$B_2$: Natriumwasserglas, 51% Feststoff, Molgewichtsverhältnis $Na_2O : SiO_2 = 1:2$

$B_3$: Natriumwasserglas, 48.6% Feststoff, Molgewichtverhältnis $Na_2O : SiO_2 = 1.2$

c) Polyäther

$C_1$: Auf n-Butanol gestarteter Polyäthylenoxid-monoalkohol OH-Zahl: 49,2

$C_2$: Auf Glycerin gestarteter Polyäthylenoxid-Polypropylenoxid-trialkohol. OH-Zahl: 56

$C_3$: Auf Saccharose/TMP/$H_2O$/gestarteter Polypropylenalkohol OH-Zahl: 380

$C_4$: Auf Äthylendiamin gestarteter Polypropylentetraalkohol. OH-Zahl: 630

$C_5$: 2,5 Gew.-Teile $C_1$ + 7,5 Gew.-Teile $C_4$

$C_6$: 5 Gew.-Teile $C_1$ + 10 Gew.-Teile $C_4$

d) Formose (hergestellt gemäß DT—OS 2 721 186)

$D_1$: 14,5% $H_2O$; Säurezahl 9,7; OH—Zahl 724

e) Suspension

Herstellung einer Kreidesuspension

$E_1$: 240 g einer Kreide (spez. Gewicht: 2,7, 90% der Teilchen $<2 \mu$, Omyalite 90 der Fa. Omya GmbH) wurden in 80 g Wasser und 5 g einer 30 %igen wäßrigen Lösung eines hochmolekularen Di-Kaliumsalzes eines Maleinsäure-Styrol-Copolymerisats mit Carboxylat und Sulfonatgruppen suspendiert. Feststoffgehalt: 75%.

## Beispiel 1

| | | |
|---|---|---|
| 100 | g Polyisocyanat $A_1$ | } Komponente I |
| 300 | g Silikatkomponente $B_1$ | |

| | | |
|---|---|---|
| 5 | g Polyäther $C_1$ | } Komponente II |
| 5 | g Polyäther $C_2$ | |

15 g Tris-($\beta$-chloräthyl)phosphat
0,2 g Stabilisator 05—710 (Polyäthersiloxan der Fa. Bayer AG)
3 g Dimethylbenzylamin
1 g Aminokatalysator (bestehend
aus 75 Gew.-% N,N-Dimethylaminoäthanol und 25 Gew.-P Diazobicyclooctan)
25 g Trichlorfluormethan
} Komponente III

Komponente II und III wurden vorgemischt. Komponente I wurde 10 sek. zur Erzielung der Primärdispersion mit einem Schnellrührer vermischt, die Mischung Komponente (II + III) wurde anschließend innerhalb von 5 sek. unter Rühren zugegeben. Nach 20 sek. Gesamtmischzeit wurde das Reaktionsgemisch in ein Papierpäckchen ausgegossen, begann nach 30 sek. aufzuschäumen und war nach 85 sek. erstarrt. Man erhielt einen Zähelastischen anorganisch-organischen Leicht-Schaumstoff mit einer Rohdichte von 48 kg/m$^3$ und einer Druckfestigkeit von 0,07 [MPa].

Vergleichsbeispiel

Eine konventionelle, gleichzeitige Vermischung der drei Komponenten gemäß Beispiel 1 führt zu einem nicht praxisgerechten Schaum mit Schaumstörungen und entschäumter, nasser Bodenzone.

Diese Entmischungserscheinungen im Bereich der Bodenzone sind offensichtlich durch eine ungenügende Vermischung der Einzelkomponenten bedingt.

Beispiel 2

| | | |
|---|---|---|
| 100 | g | Polyisocyanat $A_1$ |
| 200 | g | Silikatkomponente $B_1$ | } Komponente I

| | | |
|---|---|---|
| 5 | g | Polyäther $C_1$ |
| 5 | g | Polyäther $C_2$ | } Komponente II

| | | |
|---|---|---|
| 15 | g | Tris-($\beta$-choräthyl)phosphat |
| 0,5 | g | Stabilisator L 5340 |
| | | (Polyäthersiloxan der Fa. |
| | | Union Carbide Corp.) |
| 3 | g | Dimethylbenzylamin |
| 1 | g | Aminkatalysator gemäß Beispiel 1 |
| 25 | g | Trichlorfluormethan | } Komponente III

Die Verschäumung erfolgte gemäß Beispiel 1. Der Aufschäumprozeß setzte nach 28 sek. ein, nach 75 sek. war das Reaktionsgemisch erstarrt.
Rohdichte [kg/m$^3$]: 34
Druckfestigkeit[MPa]: 0,06

In den nachfolgenden Beispielen bedeuten:

$t_R$ = Rührzeit, Mischzeit der Mischung aus Komponente I, Komponente II und Komponente III
$t_L$ = Liegezeit, Zeitraum von Beginn des Mischens bis zum Beginn des Aufschäumens
$t_A$ = Abbindezeit, Zeitraum von Beginn des Mischens bis zur Erhärtung.

Beispiel 3

Mit zusätlichen 3 g Polyäther $C_3$ in Komponente II wurde Beispiel 2 wiederholt. Man erhielt einen Lichtschaumstoff mit folgenden Daten:
$t_R$: 20 sek., $t_L$: 33 sek., $t_A$: 85 sek.
rohdichte [kg/m$^3$]: 29
Druckfestigkeit [MPa]: 0,04

Beispiel 4

| | | |
|---|---|---|
| 100 | g | Polyisocyanat $A_1$ |
| 300 | g | Silikatkomponente $B_1$ | } Komponente I

| | | |
|---|---|---|
| 5 | g | Polyäther $C_1$ |
| 5 | g | Polyäther $C_2$ | } Komponente II

| | | |
|---|---|---|
| 15 | g | Tris ($\beta$-chloräthyl)phosphat |
| 0,5 | g | Stabilisator L 5340 gemäß |
| | | Beispiel 2 | } Komponente III

| | | |
|---|---|---|
| 3,0 | g | Dimethylbenzylamin |
| 1,0 | g | Aminkatalysator gemäß Beispiel 1 |
| 30 | g | Trichlorfluormethan | } Komponente III

Die Verschäumung erfolgte gemäß Beispiel 1. Man erhielt einen Leichtschaum mit den Daten:
$t_R$: 20 sek.; $t_L$: 40 sek.; $t_A$: 105 sek.
Rohdichte [kg/m$^3$]: 42
Druckfestigkeit [MPa]: 0,07

## 0 000 580

### Beispiel 5

| | | |
|---|---|---|
| 100 | g | Polyisocyanat $A_1$ |
| 300 | g | Silikatkomponente $B_3$ |

} Komponente I

| | | |
|---|---|---|
| 5 | g | Polyäther $C_1$ |
| 5 | g | Polyäther $C_2$ |

} Komponente II

| | | |
|---|---|---|
| 15 | g | Tris($\beta$-chloräthyl)phosphat |
| 0,5 | g | Stabilisator L 5340 gemäß Beispiel 2 |
| 1,5 | g | Dimethylbenzylamin |
| 1,0 | g | Aminkatalysator gemäß Beispiel 1 |
| 30 | g | Trichlorfluormethan |

} Komponente III

Die Verschäumung erfolgte gemäß Beispiel 1.
$t_R$: 20 sek.; $t_L$: 29 sek.; $t_A$: 105 sek.;
Rohdichte [kg/m³]: 50
Druckfestigkeit [MPa]: 0,09

### Beispiel 6

| | | |
|---|---|---|
| 100 | g | Polyisocyanat $A_1$ |
| 300 | g | Silikatkomponente $B_1$ |
| 100 | g | Tonerdeschmelzzement "Lafarge Fondu" |

} Komponente I

| | | |
|---|---|---|
| 5 | g | Polyäther $C_1$ |
| 5 | g | Polyäther $C_2$ |

} Komponente II

| | | |
|---|---|---|
| 15 | g | Tris($\beta$-chloräthyl)phosphat |
| 0,5 | g | Stabilisator L 5340 gemäß Beispiel 2 |
| 4,0 | g | Dimethylbenzylamin |
| 1,0 | g | Aminkatalysator gemäß Beispiel 1 |
| 30,0 | g | Trichlorfluormethan |

} Komponente III

Die Verschäumung erfolgte gemäß Beispiel 1.
$t_R$: 20 sek.; $t_L$: 42 sek.; $t_A$: 90 sek.;
R·ohdichte [kg/m³]: 61
Druckfestigkeit [MPa]: 0.12

### Beispiel 7

| | | |
|---|---|---|
| 100 | g | Polyisocyanat $A_1$ |
| 200 | g | Silikatkomponente $B_2$ |

} Komponente I

| | | |
|---|---|---|
| 10 | g | Polyäther $C_4$ |

} Komponente II

| | | |
|---|---|---|
| 15 | g | Tris-($\beta$-chloräthyl)phosphat |
| 1 | g | Stabilisator gemäß Beispiel 2 |
| 0,5 | g | Dimethylbenzylamin |
| 25 | g | Trichlorfluormethan |

} Komponente III

Die Verschäumung erfolgte gemäß Beispiel 1. Man erhält einen zäh-elastischen anorganisch-organischen Leichtschaumstoff mit den Werten:
$t_R$: 20 sek.; $t_L$: 34 sek.; $t_A$: 140 sek.;
Eine konventionelle, gleichzeitige Vermischung der 3 Komponenten führt zu inhomogenen, nicht schaumfähigen Reaktionsgemischen.

Weitere gemäß Beispiel 7 hergestellte anorganisch-organische Schaumstoffe sind in Tabelle 1 aufgeführt.

Es bedeuten:
TCAP: Tris($\beta$-chloräthyl)phosphat
$R_{11}$: Trichlorfluormethan
L 5340: Polyäthersiloxan der Fa. Union Carbide Corp.
DB: Dimethylbenzylamin

7

## TABELLE 1

| Beispiel Nr. | Komponente I | | | | Komponente II | Komponente III | | | | | $t_R$ (sek) | $t_L$ (sek) | $t_A$ (sek) | Rohdichte (kg/m³) | Druckfestig-keit (MPa) |
| | Polyisocyanat | | Silikatkom-ponente | | $C_4$ Polyäther (g) | TCAP (g) | L5340 (g) | DB (g) | Amin-[+] kataly-sator (g) | $R_{11}$ (g) | | | | | |
| | Typ | (g) | Typ | (g) | | | | | | | | | | | |
|---|---|---|---|---|---|---|---|---|---|---|---|---|---|---|---|
| 8 | $A_1$ | 100 | $B_3$ | 300 | 10 | 15 | 1,0 | 0,5 | 0,2 | 30 | 20 | 27 | 105 | 71 | 0,24 |
| 9 | $A_1$ | 100 | $B_2$ | 300 | 10 | 15 | 1,0 | 1,0 | — | 30 | 20 | 20 | 125 | 62 | 0,18 |
| 10 | $A_1$ | 100 | $B_1$ | 300 | 10 | 15 | 1,0 | 3,0 | 1,0 | 30 | 20 | 31 | 80 | 57 | 0,09 |
| 11 | $A_1$ | 100 | $B_1$ | 300 | 10 | 15 | 1,0 | 3,0 | 1,0 | 30 | 20 | 31 | 80 | 72 | 0,11 |
| | 100 g Lafarge Zement | | | | | | | | | | | | | | |

[+] gemaß Beispiel 1

Beispiel 12

| | | |
|---|---|---|
| 100 | g | Polyisocyanat $A_1$ |
| 300 | g | Silikatkomponente $B_1$ |

Komponente I

10 g Polyäther $C_5$ } Komponente II

| | | |
|---|---|---|
| 15 | g | Tris($\beta$-chloräthyl)phosphat |
| 1,0 | g | Stabilisator L 5340 gemäß Beispiel 2 |
| 3,0 | g | Dimethylbenzylamin |
| 1,0 | g | Aminkatalysator gemäß Beispiel 1 |
| 30,0 | g | Trichlorfluormethan |

Komponente III

Komponente II und III wurden vermischt. Komponente I wurde 10 sek. zur Erzielung der Primärdispersion mit einem Schnellrührer vermischt, die Mischung Komponente (II + III) wurde anschließend innerhalb von 5 sek. unter Rühren zugegeben. Nach 20 sek. Gesamtmischzeit wurde das Reaktionsgemisch in ein Papierpäckchen ausgegossen, begann nach 37 sek. aufzuschäumen und war nach 40 sek, erstarrt. Man erhielt einen zäh-elastischen anorganisch-organischen Leicht-Schaumstoff mit einer Rohdichte von 48 kg/m$^3$ und einer Druckfestigkeit von 0,09 [MPa].

Weitere gemäß Beispiel 12 hergestellte anorganisch-organische Schaumstoffe sind in Tabelle 2 aufgeführt:

9

TABELLE 2

| Beispiel Nr. | Komponente I | | | | Komp. II | | Komponente III | | | | | | | | Rohdichte (kg/m³) | Druckfestig-keit (MPa) |
| | Polyisocyanat | | Silikatkom-ponente | | Polyäther | | TCAP (g) | L5340 (g) | DB (g) | Amin-[+] kataly-sator (g) | $R_{11}$ (g) | $t_R$ (sek) | $t_L$ (sek) | $t_A$ (sek) | | |
| | Typ | (g) | Typ | (g) | Typ | (g) | | | | | | | | | | |
|---|---|---|---|---|---|---|---|---|---|---|---|---|---|---|---|---|
| 13 | $A_1$ | 100 | $B_3$ | 200 | $C_5$ | 10 | 15 | 1,0 | 0,5 | — | 25 | 20 | 28 | 95 | 46 | 0,11 |
| 14 | $A_1$ | 100 | $B_1$ | 200 | $C_5$ | 10 | 15 | 1,0 | 1,0 | 1,0 | 25 | 20 | 32 | 80 | 34 | 0,07 |
| 15 | $A_1$ | 100 | $B_3$ | 300 | $C_5$ | 10 | 15 | 1,0 | 0,5 | 0,2 | 30 | 20 | 27 | 110 | 58 | 0,13 |
| 16 | $A_1$ 100 g Lafarge Zement | 100 | $B_1$ | 300 | $C_5$ | 10 | 15 | 1,0 | 3,0 | 1,0 | 30 | 20 | 40 | 87 | 73 | 0,14 |
| 17 | $A_1$ | 100 | $B_1$ | 500 | $C_6$ | 15 | 15 | 1,0 | 3,0 | 1,0 | 40 | 20 | 42 | 110 | 80 | 0,09 |

[+] gemaß Beispiel 1

0 000 580

## 0 000 580

### Beispiel 18

```
100   g  Polyisocyanat A₁     ⎫
300   g  Silikatkomponente B₁ ⎬ Komponente I
```

```
 10   g  Polyäther C₅         ⎫
1,0   g  Leguval SF38⁺⁾       ⎬ Komponente II
1,0   g  Benzoylperoxid       ⎭
```

```
1,5   g  Tris(β-chloräthyl)phosphat           ⎫
1,0   g  Stabilisator L 5340 gemäß Beispiel 2 ⎪
3,0   g  Dimethylbenzylamin                   ⎬ Komponente III
1,0   g  Aminkatalysator gemäß Beispiel 1     ⎪
30,0  g  Trichlorfluormethun                  ⎭
```

Komponente II und III wurden vorgemischt. Komponente I wurde 10 sek. zur Erzielung der Primärdispersion mit einem Schnellrührer vermischt, die Mischung Komponente (II + III) wurde anschließend innerhalb von 5 sek. unter Rühren zugegeben. Nach 20 sek. Gesamtmischzeit wurde das Reaktionsgemisch in ein Papierpäckchen ausgegossen, begann nach 34 sek. aufzuschäumen und war nach 90 sek. erstarrt. Man erhielt einen zäh-elastischen anorganisch-organischen Leicht-Schaumstoff mit einer Rohdichte von 47 kg/m³ und einer Druckfestigkeit von 0,10 [MPa].

+) Ungesättigtes Polyesterharz der Fa. Bayer AG

### Beispiel 19

```
400   g  Polyisocyanat A₂                     ⎫
100   g  Trichlorfluormethan                  ⎬ Komponente I
0,2   g  Stabilisator L 5340 gemäß Beispiel 2 ⎭
```

```
600   g  Silikatkomponente B₁                 ⎫
0,2   g  Emulgator (Natriumsalz eines         ⎪
         sulfochlorierten Paraffinge-         ⎬ Komponente II
         misches C₁₀—C₁₄)                     ⎭
```

```
120   g  Formose D₁           ⎫
  3   g  Triäthylamin         ⎬ Komponente III
```

Komponente I und II wurden 5 sek. zur Erzielung der Primärdispersion mit einem Schnellrührer vermischt. Komponente III wurde nachfolgend innerhalb von 5 sek. unter Rühren zugegeben. Nach 20 sek. Gesamtmischzeit wurde das Reaktionsgemisch in ein Papierpäckchen ausgegossen. Man erhielt einen harten Schwerschaum mit den Werten:

$t_R$: 20, $t_L$: 30, $t_A$: 53
Rohdichte [kg/m³]: 212
Druckfestigkeit [MPa]: 0,60

Eine konventionelle, gleichzeitige Vermischung aller drei Komponente führt innerhalb von 20 sek. zu einem inhomogenen, hochviskosen, nicht aufschäumbaren Reaktionsgemisch.

### Beispiel 20

```
4000   g  Polyisocyanat A₂                     ⎫
   1   g  Stabilisator L 5340 gemäß Beispiel 2 ⎬ Komponente I
 800   g  Trichlorfluormethan                  ⎭
```

```
6000   g  Silikatkomponente B₁                 ⎫
   1   g  Emulgator gemäß Beispiel 19          ⎬ Komponente II
```

```
1200   g  Formose D₁           ⎫
  27   g  Triäthylamin         ⎬ Komponente III
```

Gemäß Beispiel 19 wurden die Komponenten I + II mit einem Schnellrührer vorgemischt, Komponente III wurde anschließend innerhalb von 5 sek. unter Rühren zugegeben. Nach 30 sek. intensiver Vermischung wurde das Reaktionsgemisch in eine Holzkastenform von ca. 55 dm³ Inhalt ausgegossen, begann nach 48 sek. aufzuschäumen und war nach 70 sek. erstarrt. Man erhielt einen harten anorganisch-organischen Schaumstoff mit einer Rohdichte von 169 kg/m³ und einer Druckfestigkeit von 0,57 [MPa].

11

## Beispiel 21

400 g Polyisocyanat $A_3$
85 g Trichlorfluormethan
0,2 g Stabilisator L 5340 gemäß
Beispiel 2 } Komponente I

600 g Silikatkomponente $B_1$
0,2 g Emulgator gemäß Beispiel 19 } Komponente II

120 g Formose $D_1$
3,0 g Triäthylamin } Komponente III

Die Verschäumung erfolgte gemäß Beispiel 19.
$t_R$: 20 sek.; $t_L$: 30 sek.; $t_A$: 50 sek.
Rohdichte [kg/m³]: 225
Druckfestigkeite [MPa]: 0,58

## Beispiel 22

400 g Polyisocyanat $A_2$
100 g Trichlorfluormethan
0,2 g Stabilisator L 5340 gemäß
Beispiel 2 } Komponente I

600 g Silikatkomponente $B_1$
0,2 g Emulgator gemäß Beispiel 19
300 g Tonerdeschmelzzement
"Lafarge Fondu" } Komponente II

120 g Formose $D_1$
3,0 g Triäthylamin } Komponente II

Die Verschäumung erfolgte gemäß Beispiel 19.
$t_R$: 20 sek.; $t_L$: 29 sek.; $t_A$: 55 sek.
Rohdichte [kg/m³]: 229
Druckfestigkeit [MPa]: 0,42

## Beispiel 23

400 g Polyisocyanat $A_2$
100 g Trichlorfluormethan
0,2 g Stabilisator L 5340 gemäß
Beispiel 2 } Komponente I

600 g Silikatkomponente $B_1$
0,2 g Emulgator gemäß Beispiel 19 } Komponente II

120 g Formose $D_1$
500 g Suspension $E_1$
3 g Triäthylamin } Komponente III

Die Verschäumung erfolgte gemäß Beispiel 19.
$t_R$: 20 sek.; $t_L$: 31 sek.; $t_A$: 65 sek.;
Rohdichte [kg/m³]: 166
Druckfestigkeit [MPa]: 0,37

## Beispiel 24

In einem ersten Rührer stellt man eine Dispersion von Wasserglas (50% Feststoffgehalt) und Polyisocyanat $A_1$ her, die danach in einem zweiten Rührer mit einer Mischung M folgender Zusammensetzung versetzt wird:

100 Gew.-Tle Polyäther (Polypropylenoxyd, gestartet auf Äthylendiamin, OHZ = 450)
200 Gew.-Tle Trichloräthylphosphat,
300 Gew.-Tle Trichlorfluormethan,
10 Gew.-Tle Triäthylamin und

12

10 Gew.-Tle Siliconstabilisator (OS 710, Verkaufsprodukt der Firma Bayer AG).

Die Produktströme werden auf die folgenden Werte festgelegt: Wasserglas 8000 g/min, Polyisocyanat 8040 g/min., 4920 g/min. der Mischung M. Beide Mischaggregate besitzen Stachelrührer in einer ca. 300 ml großen Mischkammer bei 3000 Upm. Die Förderung erfolgt über handelsübliche Zahnradpumpen.

Man erhält einen gleichmäßig feinzelligen Schaumstoff der Rohdichte 14 kg/m³, der kontinuierlich ohne Schwierigkeiten in Höhen bis zu 80 cm bei 100 cm Breite produziert werden kann.

Beispiel 25
(Vergleichsbeispiel)

Mit gleich großen Produktströmen wie im Beispiel 24 werden alle Komponenten gleichzeitig in einen einzigen Mischkopf eingegeben. Der jetzt entstehende Schaumstoff ist deutlich heterogen und zeigt am Boden und seitlich starke Fließstörungen die bis zu einer Höhe von ca. 60% der Blockhöhe hinaufreichen. Die Störungen können durch Erhöhung der Rührerdrehzahl bis auf 6000 Upm nicht beseitigt werden; ebenso bringt ein Zusatz von mehr Stabilisator keine merkliche Verbesserung, sondern führt dann zu schnell schrumpfenden Schaumstoffen.

Beispiel 26

Mit gleich großen Produktströmen wie in Beispiel 24 wird zunächst in einem Mischaggregat wie in Beispiel 24 eine Dispersion aus Wasserglas und Isocyanat hergestellt, die einem statischen Mischer zugeführt wird und dort mit der Mischung M vermengt wird. Man erhält einen ebenso guten Schaumstoff wie in Beispiel 24.

## Patentansprüche

1. Verfahren zur Herstellung anorganisch-organischer Kunststoffe hoher Festigkeit, Elastizität, Wärmeformbeständigkeit und Schwerentflammbarkeit bestehend aus einem als kolloides Xerosol vorliegenden Polymer-Polykieselsäuregel-Verbundmaterial durch Vermischen von

a) einem organischen Polyisocyanat

b) einer wäßrigen Alkalisilikatlösung, einem alkalisch stabilisierten Kieselsol oder einer flüssigfließfähigen basischen Suspension feinteiliger Füllstoffe mit Gehalten an anorganischen Feststoff von 20—80 Gewichtsprozent,

c) einer organischen Verbindung, die mindestens ein gegenüber Isocyanat reaktionsfähiges Wasserstoffatom sowie mindestens eine nichtionisch-hydrophile Gruppe enthält, und

d) gegebenenfalls Katalysatoren und weiteren Zusatzmitteln

und Ausreagierenlassen des so erhaltenen Gemischs, dadurch gekennzeichnet, daß die Vermischung in der Weise vorgenommen wird, daß

zunächst die Komponente a) und b), gegebenenfalls unter Zusatz der ganzen Menge oder eines Teils der Komponente d), zu einer stabilen Primärdispersion umgesetzt und

anschließend Komponente c), gegebenenfalls unter Zusatz der ganzen Menge oder eines Teils der Komponente d), unter Ausbildung einer Enddispersion zugegeben wird,

wobei die Enddispersion vor Beginn des Aushärtens bei Raumtemperatur einen Viskositätsbereich von 100—4000 cP aufweist und aus 10—50 Gew.-% anorganisch wäßriger Phase und 90—50 Gew.-% organischer Phase besteht.

2. Verfahren gemäß Anspruch 1 und 2, dadurch gekennzeichnet, daß man als Alkalisilikat Natriumsilikat mit einem $Na_2O$: $SiO_2$-Molverhältnis im Bereich von 1:1,6 bis 3,3 verwendet.

3. Verfahren gemäß Anspruch 1—2, dadurch gekennzeichnet, daß als organische Polyisocyanate Phosgenierungsprodukte der Anilin/Formaldehyd-Kondensation eingesetzt werden.

4. Verfahren nach Anspruch 1—3, dadurch gekennzeichnet, daß man als Polyisocyanat ein ionische Gruppen aufweisendes Polyisocyanat verwendet.

5. Verfahren nach Anspruch 1—4, dadurch gekennzeichnet, daß das ionische Gruppen aufweisende Polyisocyanat ein Sulfonsäure- und/oder Sulfonatgruppen aufweisendes Polyisocyanat ist.

6. Verfahren gemäß Anspruch 1—2, dadurch gekennzeichnet, daß als Polyisocyanat ein endständige Isocyanatgruppen aufweisendes nicht-ionisch hydrophile Gruppen enthaltendes Präpolymer eingesetzt wird.

## Revendications

1. Procédé pour la préparation de matièresplastiques inorganiques-organiques ayant une résistance, une élasticité, une température de déformation et une ininflammabilité élevées, consistant en un matériau composite polymère-gel d'acide polysilicique sous forme d'un xérosol colloïdal, par mélange de

a) un polyisocyanate organique,

b) une solution aqueuse de silicate alcalin, un sol de silice stabilisé par un alcali ou une suspension basique liquide-fluide de charges en fines particules ayant une teneur en solide inorganique de 20—80% en poids,

c) un composé organique qui contient au moins un atome d'hydrogène réactif vis-à-vis des isocyanates ainsi qu'au moins un groupe hydrophile non ionique, et

d) éventuellement des catalyseurs et d'autres additifs, et réaction du mélange ainsi obtenu, caractérisé en ce qu'on effectue le mélange en transformant d'abord les composants a) et b), éventuellement avec addition de tout ou partie du composant d), en une dispersion primaire stable et on ajoute ensuite le composant c), éventuellement avec addition de la totalité ou d'une partie du composant d), avec formation d'une dispersion finale, la dispersion finale présentant à la température ambiante avant le début du durcissement un domaine de viscosité de 100—4000 cP et consistant en 10—50% en poids de phase aqueuse inorganique et 90—50% en poids de phase organique.

2. Procédé selon la revendication 1, caractérisé en ce que l'on utilise comme silicate alcalin un silicate de sodium ayant un rapport molaire $Na_2O : SiO_2$ dans l'intervalle 1:1,6 à 3,3.

3. Procédé selon la revendication 1 à 2, caractérisé en ce que l'on utilise comme polyisocyanates organiques des produits de phosgénation de condensat aniline-formaldéhyde.

4. Procédé selon la revendication 1 à 3, caractérisé en ce que l'on utilise comme polyisocyanate un polyisocyanate présentant des groupes ioniques.

5. Procédé selon la revendication 1 à 4, caractérisé en ce que le polyisocyanate à groupes ioniques est un polyisocyanate présentant des groupes acide sulfonique et/ou des groupes sulfonate.

6. Procédé selon la revendication 1 à 2, caractérisé en ce que l'on utilise comme polyisocyanate un prépolymère à groupes isocyanate terminaux contenant des groupes hydrophile non ioniques.

**Claims**

1. A process for the production of inorganic-organic synthetic materials having high strength, elasticity, dimensional stability under heat, and flame resistance, consisting of a polymer-polysilicic acid gel composite material in the form of a colloidal xerosol, by mixing

a) an organic polyisocyanate,

b) an aqueous alkali metal silicate solution, an alkali-stabilized silica sol, or a liquid-fluid basic suspension of finely-divided fillers, having an inorganic solid content of from 20 to 80% by weight,

c) an organic compound containing at least one isocyanate reactive hydrogen atom and at least one non-ionic-hydrophilic group and

d) optionally catalysts and other additives and leaving the resulting mixture to react, characterized in that mixing is carried out in that components a) and b), optionally with the addition of part or all of component d) are first reacted together to form a stable primary dispersion and thereafter component c), optionally with the addition of all or part of component d), is added to form the final dispersion, which final dispersion has a viscosity range of 100 to 4000 cP at room temperature before it begins to harden and consists of 10 to 50% by weight of inorganic aqueous phase and from 90 to 50% by weight of organic phase.

2. A process according to claim 1, characterized in that the alkali metal silicate used is sodium silicate having an $Na_2O : SiO_2$ molar ratio in the region of 1:1.6 to 1:3.3.

3. A process according to claims 1 to 2, characterized in that the organic polyisocyanates used are phosgenation products of aniline-formaldehyde condensation.

4. A process according to claims 1 to 3, characterized in that the polyisocyanate used is a polyisocyanate containing ionic groups.

5. A process according to claims 1 to 4, characterized in that the polyisocyanate containing ionic groups is a polyisocyanate containing sulphonic acid and/or sulphonate groups.

6. A process according to claims 1 to 2, characterized in that the polyisocyanate used is a prepolymer having isocyanate end groups and containing non-ionic-hydrophilic groups.

14